# EUROPEAN PATENT APPLICATION

(11) **EP 4 342 932 A1**
(43) Date of publication of application: **27.03.2024**
(21) Application number: 22197776.2
(22) Date of filing: 26.09.2022
(51) Int. Cl.: C08H 7/00, C08L 63/00

(54) **LIGNIN-DERIVED CURING AGENTS, AS WELL AS THEIR USE IN RESIN COMPOSITIONS AND METHOD FOR PREPARING SAID LIGNIN-DERIVED CURING AGENTS**

(71) Applicant: VITO NV, 2400 Mol (BE)
(72) Inventor: Wroblewska, Aleksandra Alicja, 2400 Mol (BE); Gracia Vitoria, Jaime, 2400 Mol (BE); Feghali, Elias, 2400 Mol (BE); Vendamme, Richard, 2400 Mol (BE)
(74) Representative: Arnold & Siedsma

(57) **Abstract**

In general, the present invention relates to lignin-derived curing agents, as well as their use in resin compositions. Furthermore, the present invention relates to methods for preparing said lignin-derived curing agents.

## Description

### FIELD OF THE INVENTION

In general, the present invention relates to lignin-derived curing agents, as well as their use in resin compositions. Furthermore, the present invention relates to methods for preparing said lignin-derived curing agents.

### BACKGROUND TO THE INVENTION

Epoxy resins are an important class of thermosetting polymers that are widely used to produce thermoset materials used in diverse applications such as metal coatings, electronic components, electrical insulators, structural adhesives and carbon/glass fiber-reinforced composites. Their versatility comes from the fact that the epoxide group of the epoxide monomer(s), oligomer(s) or (pre-)polymer(s) can react with a range of polyfunctional curing agents, or hardeners. Typical curing agents, or hardeners, include amines, acid anhydrides, phenols, and thiols (Pham, Ha Q., et al., 2005). In this curing process, a solid, infusible, and insoluble three-dimensional cross-linked network is formed.

In general, the curing agent, or hardener, together with the (post-)curing temperature affect the viscosity and reactivity of epoxy resins and determine the type of chemical bond, the level of cross links formed and ultimately the mechanical properties of the thermoset material. However, by adding a catalyst, or accelerator, the curing process can be further modified. More specifically, the curing kinetics can be (greatly) improved, resulting in reduced (post-)curing times and/or lower (post-)curing temperatures to reach a pre-defined level of mechanical and/or thermochemical properties of the cured resin.

Amine compounds are the type of curing agent most widely used for the formation of epoxy resin thermosets. Amine compounds are classified into three categories based on their nucleophilic reactivity, namely, aliphatic, cycloaliphatic, and aromatic. The number of hydrogen atoms in an amine molecule determines its functionality. The primary amine group having two hydrogens bound to nitrogen can react with two epoxy groups, while the secondary amine can only react with one epoxy group. The tertiary amine group, having no active hydrogen atoms, will typically not react with epoxy groups, but it can act as a catalyst, or accelerator of the curing process. Depending on the type of amine used (aliphatic, cycloaliphatic, and aromatic), curing is performed at temperatures as low as room temperature (10 to 35 °C) up to 250 °C and more, optionally with post-curing.

Different accelerators are known in the art, such as Lewis acids or bases, tertiary amines, alcohols or acid compounds. One way of differentiating between these accelerators is their tendency to take part in the curing process themselves, i.e. the difference between reactive and non-reactive accelerators. Non-reactive accelerators can simplify curing speed adjustments without the need for recalculating the amine-hydrogen to epoxide stoichiometry of the system. Accelerators that typically fall into this category include mono-nonyl phenol (MNP), benzyl alcohol, triethanolamine, tris-(dimethylaminomethyl) phenol (DMP-30) and benzyldimethylamine (BDMA). In the case of reactive accelerators, recalculation of stoichiometry to maintain optimum long-term performance may be required.

The use of known accelerators like tris-(dimethylaminomethyl) phenol (DMP-30) or benzyl dimethylamine (BDMA) in combination with amine curing agents can lead to problems, like issues of odor, leaching, handling, yellowing, brittleness, and/or Tg (glass transition temperature) loss.

It is well-known that lignocellulosic biomass is a promising natural source of chemicals constituted by three main components, namely cellulose, hemicellulose and lignin, with lignin being the most abundant source of biobased phenolics. Depending on the pulping process to separate the lignin from the (hemi-)cellulose, different types of lignin are produced as a byproduct. Lignosulfonates (LS) for instance are byproducts of the sulfite pulping process and consist of aromatic and aliphatic phenolic groups, and carboxylic acids like other types of lignin, but it additionally contains aliphatic sulfonic acid salts. This chemical structure results in a watersoluble anionic polymer that can be very polydisperse in terms of molecular mass. Other pulping processes, such as the Kraft process, lead to a black liquor containing lignin, which may be further processed into sulfonated lignin (SL). In contrast to lignosulfonates bearing aliphatic sulfonic acid groups, sulfonated lignins have sulfonic acid groups on the aromatic rings.

US9006369B2 shows water based lignoepoxy resins, and methods for their preparation and use. For this purpose, a lignin or a lignosulfonate is first converted into the corresponding lignomethylol or lignosulfonatemethylol. Subsequently, the aliphatic hydroxy groups of the lignomethylol are further converted into the corresponding amine groups by reaction with an amine, such as ethylene diamine, leading to a lignoamine hardener. It is finally shown that the lignoamine hardener can be used for curing Bisphenol-A diglycidylepoxy resins, leading to an increase of the glass transition temperature. To be able to introduce the amine functionality, which is essential to act as a curing agent, it is shown that the lignin needs to be converted first into the corresponding lignomethylol.

It is therefore an object of the current invention to provide novel lignin-derived curing agents, methods to prepare them, as well as their use in resin compositions. It is a further object of this invention to provide lignin-derived curing agents which show improved curing kinetics when used as a curing agent in the resin composition, while affecting the material properties of the cured resin to the smallest possible extent.

### SUMMARY OF THE INVENTION

According to a first aspect, the present invention provides a curing agent comprising an amine-salt of a lignin-derivative bearing sulfonic acid groups.

It has been observed that the curing agent of this invention comprising an amine-salt of a lignin-derivative bearing sulfonic acid groups significantly improves the curing kinetics of a resin composition. It has further been observed that the curing agent of this invention shows a good compatibility with several organic compounds, such as resin monomers, oligomers and/or prepolymers.

According to embodiments of the invention, said lignin-derivative bearing sulfonic acid groups is a lignosulfonic acid.

It was surprisingly found by the inventors that, in contrast to lignosulfonates, which are watersoluble anionic polymers, lignosulfonic acids can be dissolved in amines directly and reacted with said amines, without compromising the homogeneity of the mixture thus obtained. While the amines themselves are known curing agents for epoxy resins, the inventors surprisingly found that the use of an amine-salt of the lignosulfonic acid significantly improves the curing kinetics of epoxy resins, and thus apparently enhances the curing properties of the amines

According to embodiments of the invention, said amine-salt is a reaction product of the lignin-derivative bearing sulfonic acid groups with one or more amines.

According to a preferred embodiment of the invention, said lignin-derivative bearing sulfonic acid groups, based on the total amount of the lignin-derivative and the one or more amines, is present in a concentration of from 0.1-40 wt%, preferably from 0.2-20 wt%, more preferably from 0.3-10 wt%, even more preferably from 0.4-5 wt%, most preferably from 0.5-1.5 wt%.

While it was found by the inventors that up to 40 wt% of lignosulfonic acid can be dissolved in an amine without compromising the homogeneity of the mixture thus obtained, the advantage of the current invention is that already small amounts of the lignin-derivative bearing sulfonic acid groups suffice to improve the curing kinetics. With small amounts is meant a concentration of 1 wt% of the lignin-derivative, or lower, based on the total amount of the lignin-derivative and the one or more amines in the mixture.

According to embodiments of the invention, said one or more amines may be monoamines or polyamines; but are in particular polyamines wherein said polyamines comprise two or more amino groups selected from primary amines, secondary amines and/or combinations thereof.

According to embodiments of the invention, said polyamines include one or more of diamines, triamines or higher amines.

According to a preferred embodiment of the invention, said polyamines are polyoxyalkylene amines.

According to embodiments of the invention, said polyoxyalkylene amines are selected from the list comprising one or more of: O,O'-bis(2-aminopropyl) polypropylene glycol-block-polyethylene glycol-block-polypropylene glycol, poly(propylene glycol) bis(2-aminopropyl ether), poly(ethylene glycol) diamine.

According to another aspect, the present invention provides a method of preparing a curing agent as defined herein, comprising the steps:
a) providing a lignin-derivative bearing sulfonic acid groups;
b) optionally adding water to the lignin-derivative bearing sulfonic acid groups, thereby obtaining a first mixture;
c) adding one or more amines to the first mixture, thereby obtaining a second mixture;
d) heating the second mixture, thereby obtaining a mixture comprising an amine-salt; and
e) optionally evaporating the water.

To facilitate the dissolution of the lignin-derivative bearing sulfonic acid group in the one or more amines, the inventors found that trace amounts of water are preferably added to the lignin-derivative bearing sulfonic acid groups prior to the addition of amine in order to swell the lignin-derivative bearing sulfonic acid group. The higher the amount of lignin-derivative bearing sulfonic acid group, based on the total amount of the lignin-derivative and the one or more amines, , the more beneficial higher amounts of water are to obtain a homogeneous mixture.

According to an embodiment of the invention, the water is added in an amount from 0.01 to 20 wt%, preferably from 0.02 to 15 wt%, more preferably from 0.05 to 10 wt%, even more preferably from 0.1 to 5 wt% of the mixture comprising an amine-salt.

According to embodiments of the invention, said lignosulfonic acid is obtained by acidification of a lignosulfonate.

It is an advantage of the current invention that lignosulfonates, which are abundantly available as a by-product from existing pulping processes, can be easily transformed into the corresponding lignosulfonic acids by known acidification processes, and subsequently into curing agents by mixing and heating with one or more amines. In this simple two-step process, cheap and abundant lignosulfonates can be transformed in potent added value chemical agents.

According to an embodiment of the invention, the mixture comprising an amine-salt is obtained by heating a mixture comprising water, one or more amines and the lignosulfonic acid at a temperature from 20 to 200 °C, preferably from 30 to 140 °C, more preferably from 60 to 100 °C.

According to another aspect, the present invention provides the use of the curing agent as defined herein, in a resin composition, preferably a resin composition comprising epoxy resins.

As stated above, the curing agents of the current invention, in essence comprising an amine-salt of a lignin-derivative bearing sulfonic acid groups, show an unprecedented improvement of the curing kinetics of known epoxy resins.

### BRIEF DESCRIPTION OF THE DRAWINGS

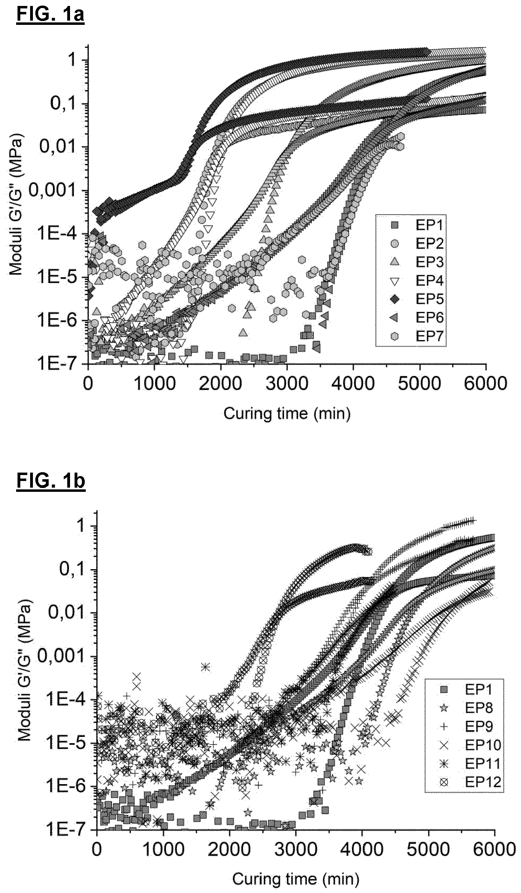

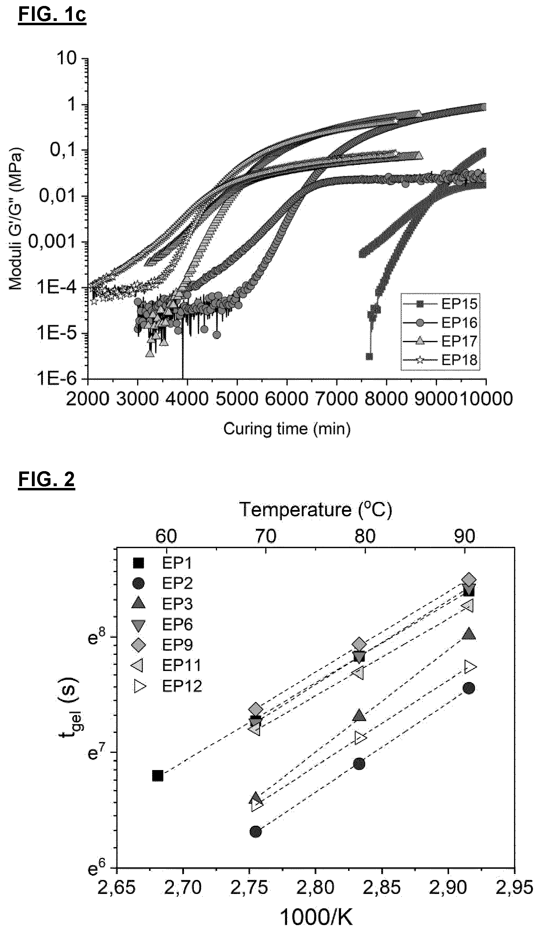

**FIG. 1a, FIG. 1b** **&** **FIG. 1c** show the curing kinetics of the different epoxy resins at 70 °C.
**FIG. 2** shows the dependency relationship between gel point and temperature of selected epoxy resins.

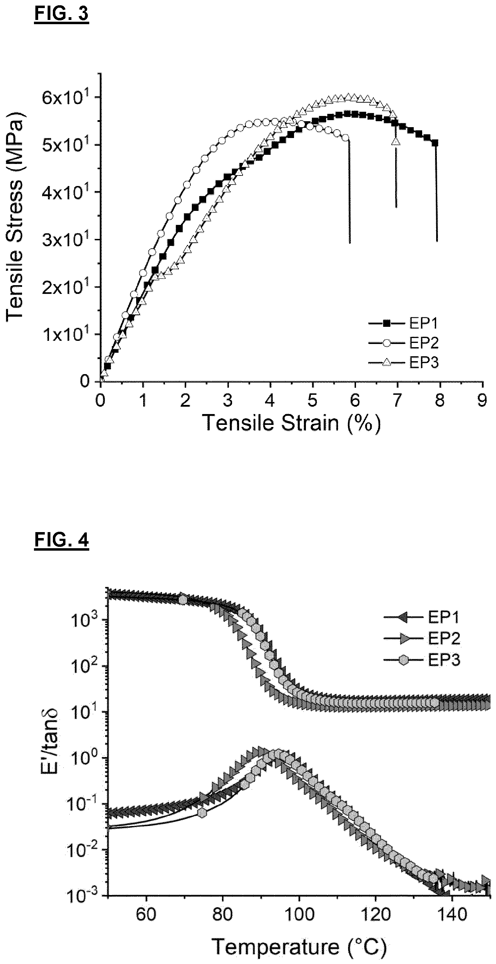

**FIG. 3** shows the mechanical properties based on a tensile stress-strain test of selected epoxy resins.
**FIG. 4** shows the dynamic mechanical thermal analysis of selected epoxy resins.

### DETAILED DESCRIPTION OF THE INVENTION

The present invention will now be further described. In the following passages, different aspects of the invention are defined in more detail. Each aspect so defined may be combined with any other aspect or aspects unless clearly indicated to the contrary. In particular, any feature indicated as being preferred or advantageous may be combined with any other feature or features indicated as being preferred or advantageous.

According to a first aspect, the present invention provides a curing agent comprising an amine-salt of a lignin-derivative bearing sulfonic acid groups.

As mentioned in the background section, epoxide monomers, oligomers, and/or (pre-)polymers can be cured with different types of curing agents, including amines. A mixture of epoxide monomers, oligomers, and/or (pre-)polymers together with a curing agent is typically referred to as a curing composition. Such a curing composition can further comprise other reactants or additives, such as catalysts or accelerators. Depending on the combination of curing agent and accelerator, both can be added separately to the curing composition, or they can be pre-mixed and/or reacted beforehand and subsequently added to the curing composition. Both the curing agent, as such, or the pre-mixed/reacted curing agent/accelerator combination, are typically referred to as 'curing agent'. Also for the current invention, the term 'curing agent' can both refer to a curing agent, as such, or the pre-mixed/reacted curing agent/accelerator combination, unless otherwise stated or denoted.

As mentioned in the background section, lignin is one of the three major constituents of lignocellulosic biomass, and the most abundant source of biobased phenolics. Typical, yet non-limiting, examples of lignocellulosic biomass are softwood, hardwood, crops, trees, bushes, grasses, agricultural residues and waste wood.

The pre-fix 'lignin-derivative' refers to any product or mixture of products resulting from the pre-treatment, modification, functionalization, depolymerization, conversion, degradation, hydrolysis, extraction and/or dissolution of lignin, lignin-containing mixtures of lignocellulosic biomass. Typical, yet non-limiting, lignin-containing mixtures are mixtures resulting from various (pulping) processes, such as kraft lignin, black liquor, lignosulfonates, organosolv lignins, hydrolysed lignin, soda lignin, steam exploded lignin.

A 'lignin-derivative bearing sulfonic acid groups' refers to any lignin-derivative, as described above, having sulfonic acid groups on its chemical structure. These sulfonic acid group can be indigenous to a specific pulping process, such as lignosulfonates resulting from the sulfite process, but they can also be the result of a specific modification or functionalization, such as sulfonated lignin. It should be appreciated that different chemical methods are known in the art to provide a lignin-derivative bearing sulfonic acid groups.

According to embodiments of the invention, said lignin-derivative bearing sulfonic acid groups is a lignosulfonic acid.

According to embodiments of the invention, said amine-salt is a reaction product of the lignin-derivative bearing sulfonic acid groups with one or more amines.

Amines refer to organic compounds bearing at least one amino group.

It should be appreciated that a reaction product of a lignin-derivative bearing sulfonic acid groups with one or more amines can comprise a number of different species, such as unreacted amines, unreacted lignin-derivative bearing sulfonic acid groups, and amines that have reacted with sulfonic acid groups in an acid-base reaction. The relative amounts of each of these species can depend on different parameters, such as the stoichiometry of each of the starting materials (lignin-derivative bearing sulfonic acid groups, one or more amines), and the reaction temperature.

According to a particular embodiment, the invention provides a curing agent of an amine-salt of a lignin-derivative bearing sulfonic acid groups. According to another particular embodiment, the invention provides a curing agent of the reaction product of a lignin-derivative bearing sulfonic acid groups with one or more amines. According to yet another particular embodiment, the invention provides a curing agent of the reaction product of a lignosulfonic acid with one or more amines.

According to embodiments of the invention, said lignin-derivative, based on the total amount of the lignin-derivative and the one or more amines, is present in a concentration of from 0.1-40 wt%, preferably from 0.2-20 wt%, more preferably from 0.3-10 wt%, even more preferably from 0.4-5 wt%, most preferably from 0.5-1.5 wt%.

"Amino" as used herein includes primary and secondary amines. According to embodiments of the invention, said one or more amines may either bemonoamines, or polyamines.

Monoamines refer to organic compounds having one amino group. Polyamines refer to organic compounds having two or more amino groups. According to an embodiment, polyamines refer to organic compounds having two or more amino groups, wherein said two or more amino groups are selected from primary amines, secondary amines and/or combinations thereof. The amines may be aromatic and/or aliphatic, and may include other functionalities, such as ethers, esters, amides, alkenes, alkynes, etc.

Examples of suitable aliphatic polyamines include ethylene diamine, 1,2-diaminopropane, 1,4-diaminobutane, 1,3-diaminopentane, 1,6-diaminohexane, 2-methyl-1,5-pentane diamine, 2,5-diamino-2,5-dimethylhexane, 2,2,4-trimethyl-1,6-diamino-hexane, 1,11-diaminoundecane, 1,12-diaminododecane, 1,3-cyclohexane diamine, 1,4-cyclohexane diamine, 1-amino-3,3,5-trimethyl-5-aminomethyl-cyclohexane, 2,4-hexahydrotolulene diamine, 2,6-hexahydrotolulene diamine, 2,4'-diamino-dicyclohexylmethane, 4,4'-diamino-dicyclohexylmethane, 5-amino-1,3,3-trimethylcyclohexanemethylamine (isophoronediamine), 1,3-cyclohexanebis(methylamine) (1,3-BAC), and 3,3'-dialkyl-4,4'diaminodicyclohexylmethanes (such as 3,3'-dimethyl-4,4'-diaminodicyclohexylmethane and 3,3'-diethyl-4,4'-diaminodicyclohexylmethane). Examples of suitable aromatic polyamines include 2,4-diaminotoluene, 2,6-diaminotoluene, 2,4'-diaminodiphenylmethane, and 4,4'-diaminodiphenyl.

According to embodiments of the invention, said polyamines are diamines, triamines or higher amines.

According to embodiments of the invention, said polyamines are polyoxyalkylene amines.

Polyoxyalkyleneamines typically contain two or more primary amino groups attached to a backbone, derived, for example, from propylene oxide, ethylene oxide, or a mixture thereof.

Examples of such amines include those available under the designation JEFFAMINE^{™} from Huntsman Corporation. Such amines can have a molecular weight from 200 to 7500 Da, such as, for example, JEFFAMINE^{™} D-230, D-400, D-500, D-2000, ED-600, T-403 and T-5000.

According to a particular embodiment, the present invention provides a curing agent comprising the reaction product of a lignin-derivative bearing sulfonic acid groups with one or more polyoxyalkylene amines.

According to another particular embodiment, the present invention provides a curing agent comprising the reaction product of a lignosulfonic acid with one or more polyoxyalkylene amines.

According to embodiments of the invention, said polyoxyalkylene amines are selected from the list comprising: O,O'-bis(2-aminopropyl) polypropylene glycol-block-polyethylene glycol-block-polypropylene glycol, poly(propylene glycol) bis(2-aminopropyl ether), poly(ethylene glycol) diamine.

According to another aspect, the present invention provides a method of preparing a curing agent as defined herein, comprising the steps:
a) providing a lignin-derivative bearing sulfonic acid groups;
b) optionally adding water to the lignin-derivative bearing sulfonic acid groups, thereby obtaining a first mixture;
c) adding one or more amines to the first mixture, thereby obtaining a second mixture;
d) heating the second mixture, thereby obtaining a mixture comprising an amine-salt; and
e) optionally evaporating the water.

To facilitate the dissolution of the lignosulfonic acid in the amine, trace amount of water are preferably added prior to the addition of amine in order to swell the lignosulfonic sample. The higher the amount of lignosulfonic acid, the more beneficial higher amounts of water are to obtain a homogeneous mixture.

According to an embodiment of the invention, the water is added in an amount from 0.01 to 20 wt%, preferably from 0.02 to 15 wt%, more preferably from 0.05 to 10 wt%, even more preferably from 0.1 to 5 wt% of the mixture comprising an amine-salt.

According to a particular embodiment, the present invention provides a method of preparing a curing agent comprising the steps of: adding 0.1 to 5 wt% of water to a lignosulfonic acid, followed by one or more amines; heating the mixture; and optionally evaporating the water.

According to another particular embodiment, the present invention provides a method of preparing a curing agent comprising the steps of: adding 0.1 to 5 wt% of water to a lignosulfonic acid, followed by one or more polyoxyalkylene amines; heating the mixture; and optionally evaporating the water.

According to embodiments of the invention, said lignosulfonic acid is obtained by acidification of a lignosulfonate.

It should be clear that acidification of the lignosulfonate can be performed by any acids or means known in the art. For example, sulfonic acid, hydrochloric acid and/or camphorsulfonic acid can be used. In a particular example, the acidification of the lignosulfonate can be performed by using an ion exchange resin, followed by freeze drying to remove water.

Scheme 1 shows a non-limiting representation of the acidification of a Na- or Mg-lignosulfonate.

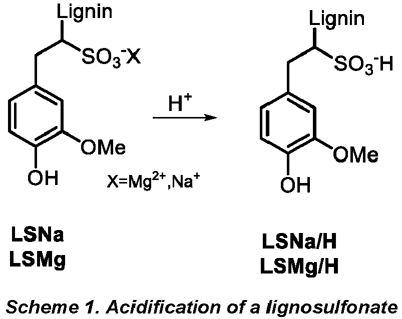

According to an embodiment of the invention, the mixture comprising an amine-salt is obtained by heating a mixture comprising water, one or more amines and the lignosulfonic acid at a temperature from 20 to 200 °C, preferably from 30 to 140 °C, more preferably from 60 to 100 °C.

According to a particular embodiment, the present invention provides a method of preparing a curing agent comprising the steps of: adding 0.1 to 5 wt% of water to a lignosulfonic acid, followed by one or more amines; heating the mixture at a temperature of 60 to 100 °C; and optionally evaporating the water.

According to a particular embodiment, the present invention provides a method of preparing a curing agent comprising the steps of: adding 0.1 to 5 wt% of water to a lignosulfonic acid, followed by one or more polyoxyalkylene amines; heating the mixture at a temperature of 60 to 100 °C; and optionally evaporating the water.

According to another aspect, the present invention provides the use of the curing agent as defined herein, in a resin composition.

According to a particular embodiment, the present invention provides the use of a curing agent, comprising the reaction product of a lignosulfonic acid with one or more polyoxyalkylene amines, in a resin composition.

According to an embodiment of the invention, the curing agent as defined herein is used in epoxy resins.

According to another particular embodiment, the present invention provides the use of a curing agent comprising the reaction product of a lignosulfonic acid with one or more polyoxyalkylene amines in epoxy resins.

### Examples

### Materials

Sodium lignosulfonate (**LSNa**) and Magnesium lignosulfonate (**LSMg**) were acquired from commercial sources. Kraft lignin LignoBoost (**KL**) was donated by RISE. 2-phenylethane-1-sulfonic acid (95%, **PESA**) was purchased from Merk Life Science and manufactured by Enamine. Methanesulfonic acid (>99.9%, **MESA**), 2,4,6-Tris(dimethylaminomethyl)phenol (95%, **DMP-30**), liquid epoxy resin Poly(Bisphenol A-co-epichlorohydrin) (*M*ₙ=355, EEW=175-180 g/eq. DGEBA), Poly(propylene glycol) bis(2-aminopropyl ether) (*M*ₙ~230 g/mol, AHEV=57.5 g/eq., **Jeffamine D-230**), Poly(propylene glycol) bis(2-aminopropyl ether) (*M*ₙ~500 g/mol, AHEV=132 g/eq., **Jeffamine ED-600**), and p-toluenesulfonic acid (**pTSA·H₂O**) were purchased from Sigma Aldrich.

Characteristics of the different accelerators are show in Table 1.

**Table 1. Characteristics of the different accelerators**

| **Accelerators** | | **³¹P NMR** | | | **GPC** | | **Elemental analysis** | | |
|---|---|---|---|---|---|---|---|---|---|
| **compound** | **type** | **OHal** | **OHar** | **COOH** | **Mₙ** | **D** | **S** | **Na** | **Mg** |
| | | **mmol/g** | **mmol/g** | **mmol/g** | **g/mol** | **[-]** | **%** | **%** | **%** |
| Lignin 1 | LSNa | 4.09 | 2.04 | 0.29 | 3860 | 2.7 | 6.8 | 9.0 | x |
| Lignin 2 | LSMg | 4.05 | 1.04 | 0.23 | 5620 | 1.3 | 8.3 | x | 3.9 |
| Lignin 3 | KL | 2.18 | 4.76 | 0.53 | 1310 | 3.3 | <0.2 | x | x |
| Phenolic/ amine | DMP-30 | - | - | - | - | - | 0 | x | x |
| Acid | pTSA·H₂O | - | - | - | - | - | 16 | x | x |
| Acid | MESA | - | - | - | - | - | 33 | x | x |
| Acid | PESA | - | - | - | - | - | 17 | x | x |

### Methods

### Elemental Analysis

The elemental content in the sample was determined by Inductively Coupled Plasma-Atomic Emission Spectroscopy (ICP-AES) after acid digestion. About 0.25 gram (dried at 105 °C) was introduced in the digestion tube. After addition of 5 mL of HNO₃ and 1 mL of H₂O₂, the following digestion was performed: ramp of 30 min to 200 °C, remain at 200 °C for 210 min (using MW7000 Anton Paar digestion system). After cooling, the sample was further diluted to 50 mL. The digested solution was analyzed with ICP-AES (Thermo Icap 6500 or Agilent Technologies 5100) for the determination of the different elements (Al, As, Ba, Ca, Cd, Cr, Cu, Fe, K, Mg, Mn, Na, Ni, Pb, Zn, P, S).

### GPC

Molecular weight (MW) distribution by Gel Permeation Chromatography (GPC). The wet samples are dissolved in NaOH 0.1 M at room temperature at a concentration of 2 g/L by gently rolling of the solution to complete solvation. If the samples are not completely solved, the %solubility should be determined and reported. After solvation, the samples (100 µL) are loaded on the size exclusion columns, with a Ultrahydrogel precolumn (Waters, Etten-Leur, The Netherlands). The separation is performed at 40 °C with MQ/ACN 80/20 + 1M NaNO₃, pH 11 (isocratic), at a flow rate of 0.4 ml/min and UV detection at 254 nm and refractive index detection. The molecular weight values were determined based on calibration curve based on sodium polystyrene standards.

### Nuclear magnetic resonance

A similar protocol than the one described in (Stücker, Alexander, et al., 2018) was followed. All the steps need to be done under inert atmosphere. Briefly, in an empty vial about 30 mg of lignosulfonic acid is weighted. In the same vial 750 µL of stock solution containing about 13.6 g/g of solution of internal standard, 1.2 g/g of solution of Cr-acetylacetonate, in a mix of of DMF-*d6* and pyridine (5.5:1 vol.) were added. The mixture is stirred until complete dissolution and then 100 µL of phosphorylating reagent (TMDP) are added and the mixture is stirred for 5 minutes. After which the spectrum is recorded using the same program and experimental parameters as described elsewhere (Stücker, Alexander, et al., 2018).

### Scanning electron microscopy

SEM images were collected using FEI Nova Nanosem 450 with Bruker Quantax 200 eds system and Xflash6160. Samples were fractured in liquid nitrogen, followed by coating using 1.5nm Pt/PD (80/20) coated in an HR208 HR Cresington coater and installed using cross-section holder.

### Curing kinetics

The gel point was measured on TA instrument Discovery HR at strain 0.01%, frequency 1 Hz at 70, 80 and/or 90°C using 25 mm geometry. In the current application, the curing kinetics are presented as the ratio of the gel point of a control example at 70 °C and the gel point of an example at the same temperature. A ratio >1 shows and increase in curing kinetics, where a ratio <1 show a decrease.

### Thermal properties

Thermal properties were measured on TA Instruments DSC250. All reported data was collected during the second heating cycle. Both, the heating and cooling rates were set to 10K/min from 25 to 180 °C.

### Example 1 - Acidification of lignosulfonates

A 10-20 wt% water solution of lignosulfonate (LSNa or LSMg) was acidified by passing it over a column filled with proton exchange resin Amberlite IR-120(H) with weight ratio of resin to lignosulfonate 6:1. The water was evaporated and the resulting lignosulfonic acid (LSNa/H or LSMg/H) was dried.

### Example 2 - Preparation of curing agents H2-H5, H13-H14

Dried lignosulfonic acid of example 1 (LSNa/H or LSMg/H) was soaked with water and subsequently Jeffamine D-230 was added. The reaction mixture was stirred at 70 °C for 2 h and subsequently dried overnight in a vacuum oven to yield a homogeneous curing agent.

### Comparative example 1 - Preparation of curing agents H6-12

Comparative examples were prepared by mixing Jeffamine D-230 with an accelerator selected from Kraft lignin (KL), DMP-30, pTSA.H₂O, MESA, and PESA, and optionally water, according to example 2.

The type and amount of accelerator, as well as the amount of amine and water used for the different curing agents of Example 2 and Comparative example 1 are shown in Table 2 below.

**Table 2. Curing agents according to Example 2 and Comparative example 1**

| **Curing agent** | **Amine** | | **Accelerator** | | **H₂O** |
|---|---|---|---|---|---|
| | **type** | **wt%** | **type** | **wt%** | **wt%** |
| H1 (control) | Jeffamine D-230 | 100 | / | / | / |
| H2 | Jeffamine D-230 | 98.99 | LSNa/H | 1 | 0.01 |
| H3 | Jeffamine D-230 | 98.99 | LSMg/H | 1 | 0.01 |
| H4 | Jeffamine D-230 | 93 | LSNa/H | 5 | 2 |
| H5 | Jeffamine D-230 | 88 | LSNa/H | 10 | 2 |
| H6 | Jeffamine D-230 | 99 | KL | 1 | 0 |
| H7 | Jeffamine D-230 | 98.99 | KL | 1 | 0.01 |
| H8 | Jeffamine D-230 | 99 | DMP-30 | 1 | 0 |
| H9 | Jeffamine D-230 | 95 | DMP-30 | 5 | 0 |
| H10 | Jeffamine D-230 | 99.5 | pTSA.H₂O | 0.5 | 0 |
| H11 | Jeffamine D-230 | 99.5 | MESA | 0.5 | 7.34 |
| H12 | Jeffamine D-230 | 99.5 | PESA | 0.5 | 7.49 |
| H13 | Jeffamine D-230 | 76.7 | LSNa/H | 20 | 3.3 |
| H14 | Jeffamine D-230 | 42.3 | LSNa/H | 40 | 17.7 |

### Example 3 - Preparation of curing agentss H15-H18

Dried lignosulfonic acid of example 1 was soaked with water and subsequently amine Jeffamine ED-600 was added. The reaction mixture was stirred at 120 °C for 16 h and subsequently dried overnight in a vacuum oven to yield a homogeneous curing agent.

The type and amount of accelerator, as well as the amount of amine and water used for the different curing agents of Example 3 are shown in Table 3 below.

**Table 3. Curing agents according to Example 3**

| **Curing agent** | **Amine** | | **Accelerator** | | **H₂O** |
|---|---|---|---|---|---|
| | **type** | **wt%** | **type** | **wt%** | **wt%** |
| H15 (control) | Jeffamine ED-600 | 100 | / | / | / |
| H16 | Jeffamine ED-600 | 94 | LsNa/H | 5 | 1 |
| H17 | Jeffamine ED-600 | 88 | LSNa/H | 10 | 2 |
| H18 | Jeffamine ED-600 | 77 | LSNa/H | 20 | 3 |

### Example 4 - Preparation of epoxy resins EP1-EP5

Curing agents as such (H1), or prepared according to example 2 (H2-H5) were homogenized with DGEBA 355 in a glass container. The mixture was transferred into a mold and cured at 70 °C for 3 h and subsequently post-cured at 105 °C for 2 h. An aliquot of the resin (curing agent and epoxy component) was collected before curing for rheological gel point measurement.

### Comparative example 2 - Preparation of epoxy resins EP6-EP12

Epoxy resins based on curing agents according to comparative example 1 (H6-H12) were prepared according to example 4.

The amount of DGEBA 355, as well as the type and amount of curing agent, the gel point and the curing kinetics of the different epoxy resins of Example 4 and Comparative example 2 are shown in Table 4 below.

**Table 4. Epoxy resins according to Example 4 and Comparative example 2**

| **Resin** | **Epoxide** | **Curing agent** | | **Gel point** | **Curing kinetics (ratio)** |
|---|---|---|---|---|---|
| | **(g)** | **type** | **(g)** | **(at 70°C)** | |
| EP1 | 10.00 | H1 (control) | 3.38 | 4450 | 1.00 |
| EP2 | 2.00 | H2 | 0.68 | 1915 | 2.32 |
| EP3 | 5.00 | H3 | 1.82 | 2584 | 1.72 |
| EP4 | 2.00 | H4 | 0.71 | 2049 | 2.17 |
| EP5 | 2.00 | H5 | 0.74 | 1578 | 2.82 |
| EP6 | 5.00 | H6 | 1.75 | 4555 | 0.98 |
| EP7 | 5.00 | H7 | 1.75 | 4517 | 0.99 |
| EP8 | 8.24 | H8 | 2.81 | 4922 | 0.90 |
| EP9 | 5.00 | H9 | 1.78 | 4052 | 1.10 |
| EP10 | 5.00 | H10 | 1.25 | 5470 | 0.81 |
| EP11 | 1.00 | H11 | 0.37 | 3785 | 1.18 |
| EP12 | 1.00 | H12 | 0.37 | 2716 | 1.64 |

### Example 5 - Preparation of epoxy resins EP15-EP18

Curing agents as such (H15), or prepared according to example 3 (H16-H18) were homogenized with DGEBA 355 in a glass container. The mixture was transferred into a mold and cured at 130 °C for 16 h. An aliquot of the resin (curing agent and epoxy component) was collected before curing for rheological gel point measurement.

The amount of DGEBA 355, as well as the type and amount of curing agent, the gel point and the curing kinetics of the different epoxy resins are shown in Table 5 below.

**Table 5. Epoxy resins according to Example 5**

| **Resin** | **Epoxide** | **Curing agent** | | **Gel point** | **Curing kinetics (ratio)** |
|---|---|---|---|---|---|
| | **(g)** | **type** | **(g)** | **(at 70°C)** | |
| EP15 | 5.00 | H15 (control) | 3.88 | 8819 | 1.00 |
| EP16 | 5.00 | H16 | 4.29 | 6454 | 1.37 |
| EP17 | 5.00 | H17 | 4.71 | 4960 | 1.78 |
| EP18 | 5.00 | H18 | 5.53 | 4420 | 2.00 |

### References

1. Pham, Ha Q., et al. "Epoxy Resins" (2005) (10.1002/14356007.a09_547.pub2)
2. Stücker, Alexander, et al. "A novel quantitative 31 P NMR spectroscopic analysis of hydroxyl groups in lignosulfonic acids." Analytical Methods 10.28 (2018): 3481-3488.

## Claims

1. A curing agent comprising an amine-salt of a lignin-derivative bearing sulfonic acid groups.

2. The curing agent according to the previous claim, wherein the lignin-derivative bearing sulfonic acid groups is a lignosulfonic acid.

3. The curing agent according to any one of the previous claims wherein the amine-salt is a reaction product of the sulfonic acid groups of the lignin-derivative with one or more amines.

4. The curing agent according to claim 3, wherein the lignin-derivative, based on the total amount of the lignin-derivative and the one or more amines, is present in a concentration of from 0.1-40 wt%, preferably from 0.2-10 wt%, more preferably from 0.5-1.5 wt%.

5. The curing agent according to any one of claims 3-4, wherein the one or more amines are selected from monoamines or polyamines; in particular polyamines wherein said polyamines comprise two or more amino groups selected from primary amines, secondary amines and/or combinations thereof..

6. The curing agent according to claim 5, wherein the polyamines comprise one or more of diamines, triamines or higher amines.

7. The curing agent according to any one of claims 5-6, wherein the polyamines are polyoxyalkylene amines.

8. The curing agent according to claim 7, wherein the polyoxyalkylene amine is selected from the list comprising one or more of: O,O'-bis(2-aminopropyl) polypropylene glycol-block-polyethylene glycol-block-polypropylene glycol, poly(propylene glycol) bis(2-aminopropyl ether), poly(ethylene glycol) diamine.

9. A method to prepare the curing agent as defined in any one of claims 1-8, comprising the steps:
a) providing a lignin-derivative bearing sulfonic acid groups;
b) optionally adding water to the lignin-derivative bearing sulfonic acid groups, thereby obtaining a first mixture;
c) adding one or more amines to the first mixture, thereby obtaining a second mixture;
d) heating the second mixture, thereby obtaining a mixture comprising an amine-salt; and
e) optionally evaporating the water.

10. The method according to claim 9, wherein the water is added in an amount from 0.01 to 20 wt%, preferably from 0.1 to 5 wt% of the mixture.

11. The method according to any one of claims 9-10, wherein the lignin-derivative bearing sulfonic acid groups is a lignosulfonic acid.

12. The method according to claim 11, wherein the lignosulfonic acid is obtained by acidification of a lignosulfonate.

13. The method according to any one of claims 9-12, wherein at step c) the mixture of lignin-derivative bearing sulfonic acid groups, water, and one or more amines is heated at a temperature from 20 to 200 °C, preferably from 30 to 140 °C, more preferably from 60 to 100 °C.

14. Use of a curing agent as defined in any one of claims 1-8 in a resin composition.

15. The use according to claim 14 in epoxy resins.
